# EUROPÄISCHE PATENTSCHRIFT

(11) **EP 0 553 683 B1**
(45) Veröffentlichungstag und Bekanntmachung des Hinweises auf die Patenterteilung: **25.06.1997**
(21) Anmeldenummer: 93100702.5
(22) Anmeldetag: 19.01.1993
(51) Int. Cl.: C08J 11/08, C08J 3/14, C08J 11/06

(54) **Verfahren zur Wiedergewinnung von in wässrig alkalischem oder saurem Milieu gelösten Polymeren**
Process for the recovery of polymers dissolved in an aqueous alkaline or acid medium
Procédé de récupération de polymères dissous dans un milieu aqueux acide ou alcalin

(30) Priorität: 28.01.1992 DE 4202248
(43) Veröffentlichungstag der Anmeldung: 04.08.1993
(73) Patentinhaber: BELLAND AG, 4500 Solothurn (CH)
(72) Erfinder: Pape, Richard F., Dr., CH-4563 Gerlafingen (CH)
(74) Vertreter: Patentanwälte Ruff, Beier, Schöndorf und Mütschele

(56) Entgegenhaltungen:
- EP-A- 0 468 375
- EP-A- 0 469 402
- US-A- 3 960 485

## Beschreibung

Die Erfindung betrifft ein Verfahren zur Wiedergewinnung von in wässrig alkalischem oder saurem Milieu gelösten Polymeren durch Ausfällen der Polymere mit sauren bzw. alkalischen Fällungsreagentien, bei dem die Ausfällung in einer starken wässrigen Strömung durch turbulente Vermischung eingeleitet wird und die ausgefällten Polymere vom wässrigen Medium abgetrennt werden. Zur Vermeidung von Abfall, zur Umweltschonung und zur Rückgewinnung wiederverwertbarer Stoffe wurde vorgeschlagen, Verpackungsmaterialien, Behälter für Lebensmittel, Eßgeschirr, wie Partygeschirr, Etiketten, insbesondere auf Flaschen und Flaschenkästen, aus Kunststoffen herzustellen, die bei neutralen pH-Werten und bei vom neutralen pH-Wert abweichenden Gebrauchsbedingungen wasserfest bzw. unlösbar sind, aber in entgegengesetztem pH-Bereich auflösbar sind. So sind in der DE-OS 37 38 786 Etiketten aus in wässrig alkalischem Milieu auflösbaren Polymeren beschrieben. In den DE-OS 34 35 468 und DE-OS 33 35 954 ist die Herstellung und die weitere Verwendung ähnlicher Polymere beschrieben. Aus der DE-OS 37 42 472 ist die Herstellung und Verwendung von alkalische Gruppen aufweisenden in wässrig saurem Milieu auflösbaren und durch Zugabe von Alkali wieder ausfällbaren Kunststoffen und deren Anwendung beschrieben. Aus der US-A-3 960 485 ist es bekannt, Carboxylgruppen enthaltende Polymere aus alkischen Entschlichtelösungen durch Säurezugabe unter Rühren auszufällen, wobei die Ionenkonzentration gesteuert wird.

Bei den bisherigen Ausfällungsverfahren, die in herkömmlichen Reaktionsgefäßen, wie Rührkesseln oder Kolben durchgeführt werden, ergeben sich besonders bei der Aufarbeitung von weichmacherhaltigen Kunststoffen oder von Kunststoffgemischen, die einen Anteil von klebrigen Polymeren enthalten, Probleme durch die aneinanderhaftenden Ausfällungsprodukte. Die ausgefällten Partikel heften sich durch ihre Klebrigkeit an die Wände der Ausfällungs- und Abtrennungseinrichtungen und führen dort durch Ansammlung weiterer anhaftender Polymerteilchen zu Verstopfungen. Die ausgefällten Polymere erhält man in der Regel in einer Form, aus der sie sich nur schwer aufarbeiten lassen und ohne vorherige Vorbehandlung nicht zufriedenstellend granulierbar sind.

Der Erfindung liegt die Aufgabe zugrunde, die Wiederaufarbeitung von gelösten Polymeren zu leicht verarbeitbaren insbesondere körnigen Produkten, zu ermöglichen, auch wenn sie zu klebrigen Fällungsprodukten neigen.

Die Erfindung ist dadurch gekennzeichnet, daß die turbulente Vermischung in einer offenen Pumpe durchgeführt wird. In den älteren, nicht vorveröffentlichten EP 0 468 375 A2 und EP 0 469 402 A2 des Anmelders ist die Anwendung einer turbulenten Strömung in der Fällungskammer beschrieben. In der EP 0 468 375 A2 ist weiterhin erwähnt, daß die Vermischung von Polymerlösung und Fällungsreagens mit Hilfe einer Pumpe, insbesondere einer Hochdruck-Kreiselpumpe, durchgeführt werden kann.

Die Polymerlösungen werden insbesondere durch Auflösen von Kunststoffabfällen, insbesondere solchen, die mit nicht lösbaren Produkten oder anderen Kunststoffen vermengt sind, in Basen bzw. Säuren hergestellt, und ggf. von festen Begleitstoffen abgetrennt, insbesondere abzentrifugiert.

Durch die schnelle innige Vermischung von Polymerlösung und Fällungsreagens in turbulenter Strömung in einer offenen Pumpe wird eine Vielzahl von Polymerpartikeln gebildet, ohne daß eine Verklebungs- oder Verstopfungsgefahr besteht. Ein zusätzlicher Vorteil der Erfindung ist darin zu sehen, daß ohne Zusatz von Hilfsmitteln, insbesondere ohne Zusatz von oberflächenaktiven Substanzen, phosphorhaltigen Tensiden oder Emulgatoren sowie ohne Zusatz von Lösungsmitteln gearbeitet werden kann. Es werden trotzdem gut verarbeitbare Coagulate erhalten, die frei von zusätzlichen Begleitstoffen sind, wodurch ihre Wiederverwertbarkeit und Umweltfreundlichkeit verbessert wird. Die schnelle turbulente Vermischung findet vorzugsweise innerhalb einer Mischdauer von 0,1 bis 2,0 Sek. statt, wobei eine Mischdauer von 0,8 bis 1,0 Sek. bevorzugt ist. Um eine schnelle Vermischung zu erreichen, wird das Fällungsreagens vorzugsweise in Form einer Flüssigkeit bzw. Lösung zugegeben. Das Verhältnis der Volumenströme von Polymerlösung zu Fällungsreagens ist unkritisch und liegt vorzugsweise bei einem Verhältnis von 6 - 8 zu 1, insbesondere 7 zu 1. Die Fällung kann bei Normaltemperatur durchgeführt werden. Eine Temperatur im Bereich von 20 bis 25°C ist bevorzugt.

Die turbulente Vermischung erfolgt mit Hilfe der offenen Pumpe, in der die Polymerlösung und das Fällungsreagens zusammengeführt werden. Bevorzugt erfolgt die turbulente Vermischung in einer offenen Kreiselpumpe. Als Mischpumpe eignet sich beispielsweise eine offene Hochdruck-Kreiselpumpe.

Bevorzugt kann das Fällungsreagens in die Reaktionspumpe eingespritzt werden. Bei der Vermischung von Polymerlösung und Fällungsreagens kann mindestens das Fällungsmittel unter Druck zugeführt werden. Mit Vorteil beträgt der angewendete Druck mindestens 5 bar. Die wässrige Lösung der Kunststoffe kann in der Regel durch Ansaugung zur Reaktionspumpe zugeführt werden. In einer weiteren Ausführungsform der Erfindung ist die Zuführung der Polymerlösung unter Druck bevorzugt. Die Zuführung der beiden Reaktanten zur Reaktionspumpe kann insbesondere über eine konzentrische Zuleitung erfolgen, wobei das Fällungsreagens bevorzugt in der inneren Leitung geführt wird. In einer bevorzugten Ausführungsform weist die konzentrische Düse einen Innendurchmesser von 1 Zoll auf. Eine Innenleitung, durch die die Polymerlösung im Ringstrom eingeführt wird, weist insbesondere einen Durchmesser von 10 mm auf. Die Pumpe erreicht auf der Ausgangsseite einen Druck von mindestens 5 bar.

Es hat sich herausgestellt, daß sich die Polymere besonders günstig ausfällen lassen, wenn die Konzentration der Polymerlösung vor der Vereinigung mit dem Fällungsreagens bei 0,5 bis 15, vorzugsweise bei 3 bis 5 Gew.-% liegt. Abweichungen hiervon sind je nach Art des auszufällenden Polymers möglich. Es ist ohne Schwierigkeiten ein Durchsatz von 2000 bis 4000 l/h, normalerweise ca. 3000 l/h pro Pumpe bzw. Pumpeinrichtung möglich, wobei der Durchsatz im wesentlichen von der Leistung der Pumpe abhängt. Mit Vorteil wird mit einer Pumpleistung von bis zu 10 m³/h gearbeitet.

Das erfindungsgemäße Verfahren eignet sich besonders zur Aufarbeitung von Mischungen von Polymeren, die in wässrig alkalischem bzw. saurem Milieu gelöst sind, wobei nach der Ausfällung Polymermischungen wiedergewonnen werden.

Mit besonderem Vorteil kann zwischen Ausfällung der Polymeren in starker wässriger Strömung und ihrer Abtrennung aus dem wässrigen Medium eine Verweildauer von mindestens 20 bis 30 Minuten eingehalten werden. Es wurde gefunden, daß während eines Zeitraums von etwa 30 Minuten nach Zugabe des Fällungsmittels Polymermaterial ausfällt. Eine entsprechende Verweildauer ergibt als zusätzlichen Effekt eine erhöhte Ausbeute an Fällungsprodukt und daher eine höhere Wiedergewinnungsrate an Polymer. Eine solche Verweilphase ist insbesondere bei nichtklebrigen Polymeren bevorzugt. Bei der Wiedergewinnung von klebrigen Polymeren kann eine Abtrennung bevorzugt innerhalb kurzer Zeit nach der Ausfällung vorgenommen werden. Bei Lösungen von Polymergemischen mit mindestens 15 % klebrigem Polymer, insbesondere auf Basis von Butylacrylaten, führen die hydrophoben Gruppen zu einer schnellen Ausfällung aus der wässrigen Lösung. Wegen ihrer Klebrigkeit koagulieren die ausgefällten Polymerteilchen schnell und können nach kurzer Zeit abgetrennt werden. Die erhaltenen Filterkuchen können Feststoffgehalte von über 60 % aufweisen.

Die ausgefällten Polymere können vor ihrer Abtrennung aus dem wässrigen Medium insbesondere einer Reifung unterzogen werden. Mit Vorteil wird die Reifung im wesentlichen in einer Ruheströmung durchgeführt. Die Reifungsphase kann beispielsweise in einem Reaktionsbehälter bei langsamem Rühren durchlaufen werden. Die Reynolds-Zahl der Strömung liegt dabei unter 1000 vorzugsweise unter 100. Bei Werten von 0,5 bis 10 werden besonders gute Ergebnisse erzielt. Eine Reifedauer von 2 bis 4, insbesondere 2,5 bis 3 Minuten reicht in der Regel aus. In einer anderen Ausführungsform der Erfindung ist eine Reifungsdauer von 20 bis 40 Minuten bevorzugt.

Die Verfahrensbedingungen können durch die verschiedenen Verfahrensparameter insbesondere durch den Grad der Turbulenz und die Gestaltung der sich anschließenden Verweilphase so aufeinander abgestellt werden, daß die ausgefällten Polymere nach der Reifung eine Teilchengröße bzw. einen Teilchenquerschnitt von 0,01 bis 100 mm² besitzen.

Im Anschluß an die Reifung erfolgt die Abtrennung der ausgefällten Polymerpartikel vom flüssigen Medium vorzugsweise im wesentlichen drucklos, insbesondere vollständig drucklos. Hierzu eignet sich zum Beispiel ein Filter, insbesondere ein Bandfilter, bei dem beispielsweise durch ein teflonbeschichtetes Polyestergewebeband das Filtrat hindurchlaufen kann und die ausgefällten Polymere auf dem Band zunehmend entwässert werden. In einer anderen Ausführungsform der Erfindung kann zum Abtrennen der Polymere mit Vorteil eine Filterpresse verwendet werden. Der anfallende Filterkuchen weist 20 bis 50 % Trockensubstanz auf. Bei ausgefällten Polymeren mit hydrophoben Polymeranteilen können Filterrückstände mit einem Feststoffgehalt von 60 bis 80 % anfallen. Durch weiteres Entwässern, insbesondere durch vorsichtiges Abpressen können die Polymere weiter getrocknet werden, bis auf einen Wassergehalt von unter 50 Gew.-%.

In dieser Form sind die Polymere bereits geeignet zur Weiterverarbeitung in einem Extruder, wobei zur weiteren Entwässerung vorzugsweise ein mit Entgasungseinrichtungen versehener Extruder verwendet wird. Aufgrund ihres nicht mehr klebenden Zustandes sind die Polymere zur unmittelbaren Beschickung des Extruders geeignet. Beim Aufschmelzen der Teilchen im Extruder entweicht das Wasser dampfförmig, so daß am Extruderende die Polymerschmelze in der gewünschten Querschnittsform austritt. Es ist weiterhin möglich, die Polymere im Extruder in üblicher Weise mit Zuschlägen, insbesondere Pigmenten, Stabilisatoren usw. zu versetzen, soweit dies erwünscht oder erforderlich ist. Im allgemeinen wird die Polymerschmelze zunächst in Form von Strängen aus dem Extruder ausgetragen und pelletisiert. Auf diese Weise ist eine Zwischenlagerung möglich oder, wenn gewünscht, eine Vermischung mit anderen Pellets bzw. Granulaten.

Die Art des Fällungsreagens hängt einerseits von der Art des auszufällenden Polymers und andererseits von der gewünschten Verfahrensführung ab. Zur Fällung von sauren Gruppen, insbesondere Carboxylgruppen, enthaltenden Polymeren können anorganische Säuren, organische Säuren und/oder sauer reagierende Salze verwendet werden. Der pH-Wert beim Ausfällen liegt normalerweise unter 6, insbesondere zwischen 2 und 3. Als anorganische Säuren eignen sich Mineralsäuren, insbesondere Schwefelsäure und Phosphorsäure. Als sauer reagierendes Salz eignet sich insbesondere Aluminiumsulfat, wobei hier neben der pH-Verschiebung auch die Eigenschaft von Al³⁺ als Coagulationshilfsmittel zum Tragen kommt. Saure Aluminiumsalze sind dann bevorzugt, wenn der Verbleib von Aluminiumoxyhydrat im ausgefällten Polymer erwünscht ist. Die Filtratlösung kann mindestens zum Teil rückgeführt und wiederverwendet werden, wobei ggf. im Überschuß angereicherte Sulfat- bzw. Phosphationen von Zeit zu Zeit durch Ausfällung entfernt werden können.

Als Fällungsreagens eignen sich jedoch auch relativ starke organische Carbonsäuren, insbesondere biologisch abbaubare Carbonsäuren wie Milchsäure, Weinsäure, Apfelsäure und insbesondere Citronensäure. Diese organischen Säuren können in einfacher Weise einer biologischen Zersetzung, insbesondere einer Vergärung unterworfen werden, so daß sie umweltfreundlich entsorgt werden. Besonders bevorzugt sind diese organischen Säuren, wenn die Lösung der Polymeren vor ihrer Ausfällung einer bakteriellen Zersetzung zur Beseitigung von mitgeschleppten Verunreinigungen unterworfen wird. Bei einer solchen Ausführung kann das Filtrat der Polymerausfällung bis zur Eingangsseite der bakteriellen Zersetzung rückgeführt und zur Einstellung der Bedingungen der biologischen Vergärung und auch als Nahrungssubstrat für die Bakterien verwendet werden.

Als Polymere mit sauren Gruppen, insbesondere Carboxylgruppen eignen sich insbesondere Copolymere von neutralen Vinylmonomeren mit α,β ungesättigten Mono- und/oder Dicarbonsäuren und/oder Anhydriden der Carbonsäuren. Als Carbonsäuren kommen besonders Acrylsäure, Methacrylsäure, Crotonsäure, Itaconsäure und Maleinsäure in Betracht. Geeignete Vinylmonomere sind Alkylacrylate und Alkylmethacrylate, wobei solche mit 1 bis 8, insbesondere 1 bis 6 Kohlenstoffatomen in der Alkoholkomponente bevorzugt sind, weiterhin Styrol. Die Polymere können auch in Form von Terpolymeren vorliegen, wobei das Termonomere vorzugsweise ein neutrales Vinylmonomer ist, das vom anderen neutralen Monomer verschieden ist. Solche Polymere sind bekannt und beispielsweise in den oben genannten DE-OS 33 35 954, DE-OS 34 35 468 und DE-OS 37 38 786 beschrieben. Dabei ist der Carboxylgruppengehalt in Abhängigkeit vom hydrophoben Charakter der neutralen Monomere vorzugsweise so eingestellt, daß die Polymere in neutralem und saurem Medium unlöslich und in alkalischem Medium über pH 8 bis 9 löslich und durch Ansäuern wieder ausfällbar sind.

Polymere, die in neutralem und basischem Medium unlöslich, aber in saurem Medium lösbar sind, sind Copolymere von Styrol mit Acrylaten sowie Copolymere von Styrol mit Methacrylaten oder Termonomere vom Typ Styrol/Acrylat/Acrylat oder Styrol/Methacrylat/Acrylat oder Styrol/Methacrylat/Methacrylat, vorzugsweise Copolymere der oben genannten neutralen Vinylmonomeren mit Dialkylaminoalkylacrylaten bzw. -methacrylaten, wie sie beispielsweise in der DE-OS 37 42 472 beschrieben sind. Auch diese Polymere können in Form von Terpolymeren vorliegen. Diese Polymere können im Gegensatz zu den oben genannten Polymeren durch Zugabe von Säuren aufgelöst und durch alkalisch wirkende Fällungsreagentien aus den sauren Lösungen wieder ausgefällt werden. Der Verfahrensgang kann im übrigen in gleicher Weise wie vorbeschrieben durchgeführt werden.

Weitere Merkmale der Erfindung ergeben sich aus der nachfolgenden Beschreibung von bevorzugten Ausführungsformen in Verbindung mit den Zeichnungen und den Unteransprüchen. Hierbei können die einzelnen Merkmale jeweils für sich alleine oder zu mehreren in Kombination miteinander bei einer Ausführungsform verwirklicht sein.

In den Zeichnungen zeigen
- Fig. 1: ein Verfahrensschema zur Durchführung des erfindungsgemäßen Verfahrens gemäß einer Ausführungsform, ausgehend von gelösten Polymeren
- Fig. 2: ein Verfahrensschema zur Durchführung einer anderen Ausführungsform der Erfindung

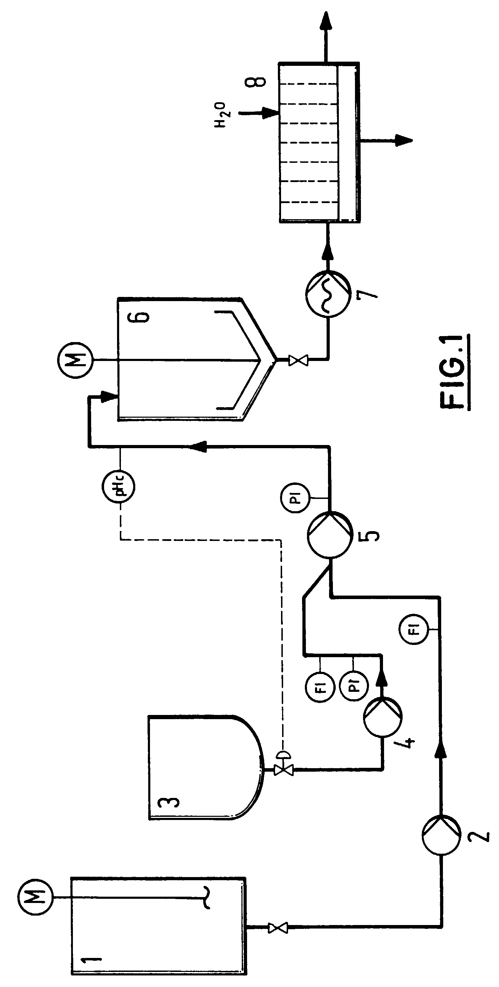

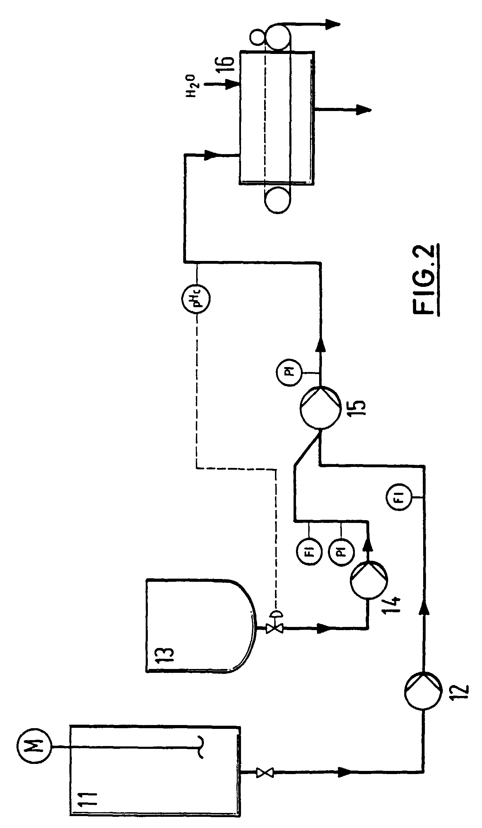

Die in den Figuren 1 und 2 dargestellen Verfahrensführungen werden entsprechend anhand der Ausführungsbeispiele 1 und 2 erläutert.

### Beispiel 1

Die zur Wiedergewinnung vorgesehenen Kunststoffe werden zunächst in einem Shredder grob zerkleinert und anschließend in einem Stofflöser mit wässriger Natronlauge versetzt, wobei sich eine Suspension bildet, die die gelösten Kunststoffe, gelöste organische Bestandteile sowie feinteiligen ungelösten Müll enthält. Diese Suspension wird zur Entfernung ungelöster Stoffe einer Fest/Flüssigtrennung unterworfen, anschließend die wässrig alkalische Polymerlösung auf geeignete Weise, z. B. durch eine bakterielle Zersetzung, von organischen Begleitstoffen befreit.

Die gereinigte alkalische Polymerlösung wird aus dem Behälter 1 über ein Meßgerät, wie z. B. einen Durchflußmesser, vorzugsweise einen Massedurchflußmesser, kontinuierlich mit 300 kg/h von einer Reaktionspumpe angesaugt, oder mittels einer Dosierpumpe 2 der Reaktionspumpe zugeleitet. Die alkalische Polymerlösung mit einem pH von 9,5 enthält 8,5 % Polymergemisch und weist bei einer Dichte von 1,02 g/cm³ eine Viskosität von 225 mPas auf. Die in der Lösung befindlichen Kunststoffe können Copolymere der Methacrylsäure mit Ethylacrylat (Molverhältnis 1 : 4), der Methacrylsäure mit Methylacrylat (Molverhältnis 1 : 4) und der Acrylsäure mit Styrol (Molverhältnis 1 : 1,75) umfassen. Aus dem Fällungsmittelbehälter 3 werden mit einer Dosierpumpe 4 kontinuierlich 63 kg/h einer 4 %igen wässrigen Schwefelsäurelösung über ein Meßgerät, z. B. einen Durchflußmesser, vorzugsweise einen Massedurchflußmesser, in die Reaktionspumpe 5 eindosiert. Das Fällungsreagens wird in die Reaktionspumpe eingespritzt, wobei es unter einem Druck von 5 bar steht. Die Zuführung der beiden Reaktanten zur Reaktionspumpe erfolgt vorteilhaft über eine, in der Zeichnung nicht dargestellte, konzentrische Zuleitung, wobei die Säure in der inneren Leitung geführt wird, deren konzentrische Düse einen Innendurchmesser von 1 Zoll aufweist. Die äußere Leitung mit ringförmigem Querschnitt, durch die die Polymerlösung im Ringstrom eingeführt wird, weist einen Durchmesser von 10 mm auf.

Die Reaktionspumpe ist so ausgelegt, daß durch eine offene Bauweise eine Verstopfung mit dem sich bildenden Polymerniederschlag vermieden werden kann. Dabei kann die Pumpe Drücke von 5 bis 6 bar aufbauen. Vorzugsweise wird eine offene Kreiselpumpe verwendet. Durch das intensive Mischen der alkalischen Polymerlösung mit der Säure beginnt in der Pumpe die Rückbildung das carboxylhaltigen Kunststoffes, der nicht mehr wasserlöslich ist und als Feststoff ausfällt. Die Ausfällreaktion wird mit einem pH-Meter überwacht, das auch die Dosierung des Fällungsmittels regelt. Die anfänglich gebildeten kleinen Partikel in der sauren Mutterlauge bei pH 3 bis 4 gelangen in einen Zwischenbehälter 6, wo bei einer Ruheströmung unter langsamem Rühren während einer Verweilzeit von 35 bis 40 Minuten die Polymere vollständig ausfallen und die Teilchen einen Reifeprozeß durchlaufen. Dabei koagulieren die feinen Polymerpartikel und wachsen zu Teilchen von 0,2 bis 1 mm Durchmesser, die dann als breiförmiges Fällungsprodukt mit einer Exzenterschneckenpumpe 7 in eine Filterpresse 8 geleitet werden. Das ablaufende Filtrat kann abgelassen werden und ggf. nach Aufbereitung erneut zur Lösung von Polymeren eingesetzt werden. Nach Abtrennen vom sauren Filtrat wird der Polymer-Filterkuchen mit Wasser gewaschen, um Säurereste zu entfernen. Der Filterkuchen enthält 25 bis 30 % Trockensubstanz. Er wird anschließend getrocknet, gemahlen und für neue Verwendungszwecke compoundiert.

### Beispiel 2

Die beispielsweise in einer Waschanlage für mit ablösbaren Etiketten versehene Gegenstände aufgefangene alkalische Polymerlösung wird aus einem Behälter 11 über ein Meßgerät, wie z. B. einen Durchflußmesser, vorzugsweise Massedurchflußmesser mit 1200 kg/h von einer Dosierpumpe 12 angesaugt und einer Reaktionspumpe 15 zugeleitet, oder direkt von der Reaktionspumpe, z. B. einer Hochdruck-Kreiselpumpe angesaugt. Die alkalische Polymerlösung von pH 10 enthält ein Gemisch von 85 % Folienpolymer und 15 % Kleberpolymer mit einem Gesamtgehalt von 8 % Trockensubstanz, das bei einer Dichte von 1,02 g/cm³ eine Viskosität von 40 mPas aufweist. Die gelösten Kunststoffe können Copolymere der Methacrylsäure mit Ethylacrylat (Molverhältnis 1 : 3,5) und der Acrylsäure mit Butylacrylat (Molverhältnis 1 : 4) umfassen. Ferner ist suspendiertes Titandioxid enthalten, das beim Etikettenmaterial als Pigment eingesetzt wird.

Aus dem Fällungsmittelbehälter 13 werden mit einer Dosierpumpe 14 kontinuierlich unter Kontrolle eines Meßgerätes, wie z. B. einem Durchflußmesser, 93 kg/h einer 8 %igen wässrigen Schwefelsäurelösung in die Reaktionspumpe 15 zur alkalischen Polymerlösung zugeleitet. Die Reaktionspumpe 15 gewährleistet durch ihren intensiven Mischeffekt und ihre vorzugsweise offene Bauweise einen optimalen Ablauf der Fällungsreaktion. Die Ausfällreaktion wird mit einem pH-Meter überwacht, das auch die Dosierung des Fällungsmittels regelt. Durch ihren Gehalt an klebrigen Polymeren koagulieren die zunächst als feinteiliger Niederschlag ausgefällten Polymere rasch zu größeren Partikeln. Der sich in der Pumpe bildende Polymerniederschlag wird unter Druck zu einem Bandfilter 16 geleitet, wo er von der sauren Mutterlauge mit einem pH von 3 bis 4 abgetrennt wird. Um ein Anhaften des klebrige Polymere enthaltenden Fällungsproduktes auf das Bandfilter zu vermeiden, wird ein mit Teflon beschichtetes Polyesterband verwendet. Nach Auswaschen von Säureresten und Auspressen wird ein Filterkuchen mit 60 bis 65 % Trockensubstanz erhalten. Der Filterkuchen wird getrocknet, gemahlen und das pulver- bzw. granulatförmige polymere Material kann wie oben beschrieben aufgearbeitet und einer Wiederverwendung zugeführt werden. Das Filtrat kann als Spülflüssigkeit in die Waschanlage rückgeführt werden, bis der Gehalt an Sulfat so weit angereichert ist, daß eine übliche Ausfällung, z.B. in Form von Gips, vorgenommen wird.

## Patentansprüche

1. Verfahren zur Wiedergewinnung von in wässrig alkalischem oder saurem Milieu gelösten Polymeren durch Ausfällen der Polymere mit sauren bzw. alkalischen Fällungsreagentien, bei dem die Ausfällung in einer starken wässrigen Strömung durch turbulente Vermischung eingeleitet wird und die ausgefällten Polymere vom wässrigen Medium abgetrennt werden, dadurch gekennzeichnet, daß die turbulente Vermischung in einer offenen Pumpe durchgeführt wird.

2. Verfahren nach Anspruch 1, dadurch gekennzeichnet, daß die Ausfällung unter schneller turbulenter Vermischung durchgeführt wird.

3. Verfahren nach einem der vorhergehenden Ansprüche, dadurch gekennzeichnet, daß die turbulente Vermischung in einer offenen Kreiselpumpe durchgeführt wird.

4. Verfahren nach einem der vorhergehenden Ansprüche, dadurch gekennzeichnet, daß Mischungen von in wässrig alkalischem oder saurem Milieu gelösten Polymeren eingesetzt und Polymermischungen wiedergewonnen werden.

5. Verfahren nach einem der vorhergehenden Ansprüche, dadurch gekennzeichnet, daß zwischen Ausfällung der Polymeren in starker wässriger Strömung und ihrer Abtrennung aus dem wässrigen Medium eine Verweildauer von mindestens 20 bis 30 Minuten eingehalten wird.

6. Verfahren nach einem der vorhergehenden Ansprüche, dadurch gekennzeichnet, daß bei klebrigen Polymeren, innerhalb kurzer Zeit nach Ausfällung eine Abtrennung aus dem wässrigen Medium vorgenommen wird.

7. Verfahren nach einem der vorhergehenden Ansprüche, dadurch gekennzeichnet, daß die ausgefällten Polymere einer Reifung unterzogen werden, bevor die Abtrennung aus dem wässrigen Medium erfolgt.

8. Verfahren nach einem der vorhergehenden Ansprüche, dadurch gekennzeichnet, daß die Reifung bei im wesentlichen laminarer Strömung durchgeführt wird.

9. Verfahren nach einem der vorhergehenden Ansprüche, dadurch gekennzeichnet, daß die Reifungsdauer 2 bis 4 min. beträgt.

10. Verfahren nach einem der Ansprüche 1 bis 8, dadurch gekennzeichnet, daß die Reifungsdauer 20 bis 40 min. beträgt.

11. Verfahren nach einem der vorhergehenden Ansprüche, dadurch gekennzeichnet, daß die Turbulenz und die sich anschließende Reifung so aufeinander abgestimmt werden, daß die ausgefällten Partikel nach der Reifung mit einem Querschnitt von 0,01 bis 100 mm² anfallen.

12. Verfahren nach einem der vorhergehenden Ansprüche, dadurch gekennzeichnet, daß die ausgefällten Polymere vom flüssigen Medium im wesentlichen drucklos abgetrennt werden.

13. Verfahren nach einem der Ansprüche 1 bis 11, dadurch gekennzeichnet, daß die ausgefällten Polymere vom flüssigen Medium mit Hilfe einer Filterpresse abgetrennt werden.

14. Verfahren nach einem der Ansprüche 1 bis 11, dadurch gekennzeichnet, daß die ausgefällten Polymere vom flüssigen Medium mit Hilfe eines Bandfilters abgetrennt werden.

15. Verfahren nach einem der vorhergehenden Ansprüche, dadurch gekennzeichnet, daß die ausgefällten Polymere mit einem Wassergehalt von 50 bis 80 Gew.-% abgetrennt werden.

16. Verfahren nach einem der vorhergehenden Ansprüche, dadurch gekennzeichnet, daß die ausgefällten Polymere mit hydrophoben Polymeranteilen mit einem Feststoffgehalt von 60 bis 80 % anfallen.

17. Verfahren nach einem der vorhergehenden Ansprüche, dadurch gekennzeichnet, daß die abgetrennten Polymere auf einen Wassergehalt von weniger als 50 % vorgetrocknet werden.

18. Verfahren nach einem der vorhergehenden Ansprüche, dadurch gekennzeichnet, daß die abgetrennten Polymere in einen Extruder gegeben und zu einem im wesentlichen wasserfreien Produkt verarbeitet werden.

19. Verfahren nach einem der vorhergehenden Ansprüche, dadurch gekennzeichnet, daß die ausgefällten Polymere mit Hilfe eines Extruders zu Pellets bzw. Granulaten verarbeitet werden.

## Claims

1. Process for the recovery of polymers dissolved in aqueous alkaline or acid media by precipitating the polymers with acid or alkaline precipitants, in which precipitation is initiated in a strong, aqueous flow by turbulent mixing and the precipitated polymers are separated from the aqueous medium, characterized in that the turbulent mixing is performed in an open pump.

2. Process according to claim 1, characterized in that precipitation is performed under rapid turbulent mixing.

3. Process according to one of the preceding claims, characterized in that the turbulent mixing is performed in an open centrifugal pump.

4. Process according to one of the preceding claims, characterized in that use is made of mixtures of polymers dissolved in aqueous alkaline or acid media and polymer mixtures are recovered.

5. Process according to one of the preceding claims, characterized in that between the precipitation of the polymers in the strong aqueous flow and their separation from the aqueous medium a residence time of at least 20 to 30 minutes is maintained.

6. Process according to one of the preceding claims, characterized in that in the case of sticky polymers, within a short time following precipitation a separation from the aqueous medium takes place.

7. Process according to one of the preceding claims, characterized in that the precipitated polymers undergo a maturing or ripening prior to the separation from the aqueous medium.

8. Process according to one of the preceding claims, characterized in that the maturing or ripening is performed in a substantially laminar flow.

9. Process according to one of the preceding claims, characterized in that maturing or ripening lasts 2 to 4 min.

10. Process according to one of the claims 1 to 8, characterized in that maturing or ripening lasts 20 to 40 min.

11. Process according to one of the preceding claims, characterized in that the turbulence and following maturing or ripening are so matched to one another that the precipitated particles are obtained after maturing or ripening with a cross-section of 0.01 to 100 mm².

12. Process according to one of the preceding claims, characterized in that the precipitated polymers are separated in a substantially pressureless manner from the liquid medium.

13. Process according to one of the claims 1 to 11, characterized in that the precipitated polymers are separated from the liquid medium with the aid of a filter press.

14. Process according to one of the claims 1 to 11, characterized in that the precipitated polymers are separated from the liquid medium with the aid of a belt filter.

15. Process according to one of the preceding claims, characterized in that the precipitated polymers are separated with a water content of 50 to 80 wt.%.

16. Process according to one of the preceding claims, characterized in that the precipitated polymers are obtained with hydrophobic polymer fractions having a solids content of 60 to 80%.

17. Process according to one of the preceding claims, characterized in that the separated polymers are predried to a water content of less than 50%.

18. Process according to one of the preceding claims, characterized in that the separated polymers are fed into an extruder and processed to a substantially anhydrous product.

19. Process according to one of the preceding claims, characterized in that the precipitated polymers are processed with the aid of an extruder to pellets or granules.

## Revendications

1. Procédé pour la récupération de polymères dissous dans un milieu aqueux alcalin ou acide par précipitation des polymères avec des réactifs de précipitation acides, respectivement alcalins, dans lequel on déclenche la précipitation dans un courant aqueux fort par mélange turbulent et on sépare du milieu aqueux les polymères précipités, caractérisé en ce qu'on effectue le mélange turbulent dans une pompe ouverte.

2. Procédé selon la revendication 1, caractérisé en ce qu'on effectue la précipitation dans des conditions de mélange turbulent rapide.

3. Procédé selon l'une quelconque des revendications précédentes, caractérisé en ce qu'on effectue le mélange turbulent dans une pompe de circulation ouverte.

4. Procédé selon l'une quelconque des revendications précédentes, caractérisé en ce qu'on met en oeuvre des mélanges de polymères dissous dans un milieu aqueux alcalin ou acide et on récupère des mélanges de polymères.

5. Procédé selon l'une quelconque des revendications précédentes, caractérisé en ce que, entre leur précipitation dans un courant aqueux fort et leur séparation du milieu aqueux, on laisse les polymères à l'abandon pendant un laps de temps d'au moins 20 à 30 minutes.

6. Procédé selon l'une quelconque des revendications précédentes, caractérisé en ce que, dans le cas de polymères collants, on procède à une séparation du milieu aqueux, peu de temps après la précipitation.

7. Procédé selon l'une quelconque des revendications précédentes, caractérisé en ce qu'on soumet les polymères précipités à une maturation avant de les séparer du milieu aqueux.

8. Procédé selon l'une quelconque des revendications précédentes, caractérisé en ce qu'on effectue la maturation dans un courant essentiellement laminaire.

9. Procédé selon l'une quelconque des revendications précédentes, caractérisé en ce que la durée de maturation s'élève de 2 à 4 min.

10. Procédé selon l'une quelconque des revendications 1 à 8, caractérisé en ce que la durée de maturation s'élève de 20 à 40 minutes.

11. Procédé selon l'une quelconque des revendications précédentes, caractérisé en ce qu'on module la turbulence et la maturation qui s'y raccorde, l'une par rapport à l'autre, de telle sorte que l'on obtient des particules précipitées présentant, après la maturation, une section transversale de 0,01 à 100 mm².

12. Procédé selon l'une quelconque des revendications précédentes, caractérisé en ce qu'on sépare les polymères précipités du milieu aqueux essentiellement sans pression.

13. Procédé selon l'une quelconque des revendications 1 à 11, caractérisé en ce qu'on sépare les polymères précipités du milieu aqueux à l'aide d'un filtre-presse.

14. Procédé selon l'une quelconque des revendications 1 à 11, caractérisé en ce qu'on sépare les polymères précipités du milieu aqueux à l'aide d'un filtre passe-bande.

15. Procédé selon l'une quelconque des revendications précédentes, caractérisé en ce qu'on sépare les polymères précipités avec une teneur en eau de 50 à 80% en poids.

16. Procédé selon l'une quelconque des revendications précédentes, caractérisé en ce qu'on obtient les polymères précipités avec des fractions polymères hydrophobes possédant une teneur en substances solides de 60 à 80%.

17. Procédé selon l'une quelconque des revendications précédentes, caractérisé en ce qu'on soumet les polymères séparés à un préséchage pour obtenir une teneur en eau inférieure à 50%.

18. Procédé selon l'une quelconque des revendications précédentes, caractérisé en ce qu'on introduit les polymères séparés dans une extrudeuse et on les traite pour obtenir un produit essentiellement anhydre.

19. Procédé selon l'une quelconque des revendications précédentes, caractérisé en ce qu'on traite les polymères précipités à l'aide d'une extrudeuse pour les transformer en boulettes, respectivement en produits de granulation.
